# EUROPÄISCHE PATENTSCHRIFT

(11) **EP 0 569 885 B1**
(45) Veröffentlichungstag und Bekanntmachung des Hinweises auf die Patenterteilung: **18.09.1996**
(21) Anmeldenummer: 93107480.1
(22) Anmeldetag: 07.05.1993
(51) Int. Cl.: B60S 3/04, A47L 15/30, B08B 3/02

(54) **Vorrichtung und Verfahren zum Reinigen von Wagen zum Transport von Speisetabletts oder dergleichen sowie Wagen hierfür**
Apparatus and method to clean a trolley for transporting food trays or the like and the trolley
Dispositif et procédé pour nettoyer un chariot pour le transport des plateaux d'alimentation ou similaires et chariot approprié

(30) Priorität: 12.05.1992 DE 4215614
(43) Veröffentlichungstag der Anmeldung: 18.11.1993
(73) Patentinhaber: PREMARK FEG CORPORATION, Wilmington, Delaware 19801 (US)
(72) Erfinder: Truetsch, Claus, W-7630 Lahr (DE)
(74) Vertreter: Füchsle, Klaus, Dipl.-Ing.

(56) Entgegenhaltungen:
- EP-A- 0 391 845
- DE-A- 1 806 107
- DE-A- 3 828 035
- US-A- 3 736 948
- US-A- 4 408 625
- US-A- 4 452 263

## Beschreibung

Die Erfindung betrifft eine Vorrichtung zum Reinigen von zumindest einem Wagen zum Transport von Speisetabletts oder dergleichen, insbesondere Servierwagen für den Flugzeugborddienst, wobei der Wagen zumindest an einer Seite zum Be- und Entladen der Tabletts offen ist, gemäß dem Oberbegriff des Patentanspruchs 1.

Die Erfindung betrifft des weiteren ein Verfahren zum Reinigen derartiger Wagen gemäß dem Oberbegriff des Patentanspruchs 13.

Eine solche Vorrichtung und ein solches Verfahren sind aus der DE-A-18 06 107 bekannt. Die dort offenbarte Vorrichtung zum Reinigen von zumindest einem Wagen zum Transport von Tabletts oder dergleichen, wobei der Wagen zumindest an einer Seite zum Be- und Entladen von Tabletts offen ist, umfaßt ein Gehäuse, welches eine verschließbare Einlaßöffnung aufweist und zum Aufnehmen des Wagens ausgebildet ist, eine Antriebseinrichtung, mittels derer der Wagen bewegbar ist, eine Reinigungseinrichtung, eine Steuereinrichtung für den Betrieb der Antriebseinrichtung und der Reinigungseinrichtung, und eine im Gehäuse vorgesehen Dreheinrichtung für den Wagen. Bei dem Verfahren zum Reinigen derartiger Wagen wird der Wagen einer Reinigungseinrichtung zugeführt und anschließend an der Reinigungseinrichtung vorbeibewegt, wobei diese Bewegung als eine Drehung in konstanter Richtung ausgeführt wird, und so gereinigt. Die Bewegung des Wagens und der Reinigungsvorgang werden gesteuert.

Bei der Vorrichtung und bei dem Verfahren zum Reinigen von Wagen zum Transport von Speisetabletts oder dergleichen handelt es sich in der vorliegenden Erfindung allgemein um Servierwagen oder dergleichen, die für den Transport einer Vielzahl von Speisetabletts, insbesondere für den Borddienst in Flugzeugen, aber auch für die Verteilung von Speisen auf Tabletts in Pflegeanstalten, wie zum Beispiel Krankenhäusern oder Altersheimen, geeignet sind. In der Regel haben diese Wagen eine langgestreckte kastenartige Form, die entweder an einer oder beiden schmalen Seiten oder Enden zum Be- und Entladen von Speisetabletts offen und mittels Flügeltüren verschließbar ausgebildet ist. Insbesondere werden beim Borddienst Wagen eingesetzt, deren Größen eine Standardgröße oder die Hälfte davon besitzen. Bei den Standardgrößen kann der Wageninnenraum durch eine offene oder geschlossene Trennwand unterteilt sein, was beim Reinigen dieser Wagen besondere Probleme verursacht, da das Wageninnere dann von beiden Seiten gereinigt werden muß. Die Wagen bestehen meistens aus Aluminium oder beschichtetem Kunststoff und laufen auf Lenkrollen, die entweder durch einen Handgriff oder ein Pedal gemeinsam gebremst werden können. Zum Be- und Entladen lassen sich die Flügeltüren um 270° schwenken. Die inneren Seitenwände der Wagen weisen waagerechte Nuten oder Schienen auf, in die die Speisetabletts übereinander eingeschoben werden. Bei der Wagenreinigung müssen insbesondere diese Innenseitenwände berücksichtigt werden, da die Nuten oder Schienen Ablageflächen zur Ansammlung von Schmutz darstellen.

Eine weitere Vorrichtung und ein weiteres Verfahren der eingangsgenannten Gattung sind in der DE-A-3 828 035 offenbart. Dementsprechend werden der Reinigungsmaschine Servierwagen zugeführt, geöffnet, vorgewaschen, gewaschen, gespült, getrocknet und abgeführt, wobei sie mindestens vom Waschen bis zum Trocknen von einem Förderband durch die Maschine gefördert werden. Um eine gute Reinigungswirkung zu erzielen, werden die Wagen mit ihren offenen Seiten quer zur Förderrichtung der Wagen entlang der Reinigungsstraße bewegt, wobei in den in Förderrichtung hintereinander angeordneten Zonen zum Vorwaschen, Waschen, Spülen und Trocknen horizontal gerichtete Sprüh- bzw. Luftstrahlen von der Seite auf das Äußere und Innere der Wagen auftreffen. Die Hintereinanderanordnung der einzelnen Reinigungszonen entlang des Förderbandes hat jedoch zur Folge, daß die Reinigungsvorrichtung sehr lang ist. Zusätzlich kann eine gezielte Reinigung, insbesondere des Wageninnenraums, nicht erreicht werden, da die besonders verschmutzten Seiteninnenwände des Wagens parallel zu den quer zur Förderrichtung gerichteten Sprühstrahlen an diesen vorbeibewegt werden.

Es ist daher die Aufgabe der Erfindung, eine Vorrichtung und ein Verfahren zum Reinigen von Wagen der eingangs genannten Gattung zu schaffen, welche geringen Raumbedarf benötigen und zuverlässig mit gutem Reinigungsergebnis arbeiten.

Diese Aufgabe wird von einer Vorrichtung der eingangs genannten Gattung mit den Merkmalen des Patentanspruchs 1 gelöst.

Des weiteren wird diese Aufgabe von einem Verfahren der eingangs genannten Gattung mit den Merkmalen des Patentanspruchs 13 gelöst. Vorteilhafte Ausgestaltungen sind Gegenstand der Unteransprüche.

Die besondere Ausgestaltung der zu reinigenden kastenförmigen Wagen mit zumindest einer offenen Seite, wie zum Beispiel Borddienstwagen, hat zur Folge, daß ein Zugang zum Innenraum des Wagens zu seiner Reinigung nur durch die offene Seite oder die offenen Seiten besteht, obwohl dieser Innenraum üblicherweise am meisten durch Speisereste und dergleichen verschmutzt ist. Mit der Vorrichtung und dem Verfahren gemäß der vorliegenden Erfindung wird jedoch den Bedürfnissen bei der Reinigung der Wagen und insbesondere des Wageninnenraumes Rechnung getragen. Das erfindungsgemäße Drehen des Wagens und die Steuerung dieser Drehbewegung und der jeweiligen Reinigungsvorgänge, wie Ausblasen, Waschen, Spülen und Trocknen in Abhängigkeit zueinander, hat eine besonders vorteilhafte Reinigung zur Folge, da die unterschiedlichen Wagenbereiche und insbesondere die stark verschmutzten Stellen durch entsprechende Steuerung gezielt gereinigt werden können. Die Dreheinrichtung kann erfindungsgemäß durch die Steuereinrichtung oszillierend, und zwar über Kreissegmentstrecken oszillierend, bewegt werden. Wenn der Drehtisch nicht nur gedreht, sonder über bestimmte Kreissegmentstrecken oszillierend bewegt wird, wird der Reinigungsvorgang zusätzlich unterstützt. Diese oszillierende Bewegung der Dreheinrichtung oder des Drehtisches ermöglicht eine Konzentrierung des entsprechenden Reinigungsvorgangs, nämlich des Ausblasens, Waschens, Spülens oder Trocknens. Hiermit kann gewährleistet werden, daß der jeweilige Vorgang in optimaler Weise durchgeführt wird, da alle, insbesondere die schwer verschmutzten Stellen des Wagens, gezielter gereinigt werden können.

Die Steuerung der Drehbewegung in Abhängigkeit vom Reinigungsvorgang hat den besonderen Vorteil, daß der Wagen immer in die optimale Stellung gegenüber den entsprechenden Elementen der Reinigungseinrichtung für Ausblasen, Waschen, Spülen oder Trocknen gebracht wird. Dies gilt insbesondere für das Reinigen des Wageninnenraumes, da die jeweiligen Wasser- und Luftstrahlen während der einzelnen Reinigungsvorgänge bei entsprechender Lage des Wagens unter anderem über längere Zeit und unter einem Winkel auf die besonders verschmutzten Innenseitenwände und den Boden des Wagens auftreffen können. Hierdurch wird gewährleistet, daß alle schwer zugänglichen oder besonders verschmutzten Stellen des Wagens mit sehr guten Ergebnissen gereinigt werden können, was beispielsweise bei den Förderbandreinigungsvorrichtungen nicht der Fall ist.

Zusätzlich zu dem oben erwähnten, erheblich verbesserten Reinigungseffekt ergibt sich durch die Vorrichtung und das Verfahren der vorliegenden Erfindung der weitere wesentliche Vorteil, daß dieser besonders gute Reinigungseffekt mit sehr geringem Raumbedarf zuverlässig gewährleistet werden kann. Die kompakte Ausbildung der erfindungsgemäßen Vorrichtung bzw. der geringe Raumbedarf des erfindungsgemäßen Verfahrens werden in vorteilhafter Weise dadurch erreicht, daß lediglich eine Drehbewegung des Wagens vorgesehen ist und daß diese Drehbewegung in Abhängigkeit von den einzelnen Reinigungsschritten des Reinigungsvorgangs gesteuert wird. Die Notwendigkeit, genügend Zeit für jeden Reinigungsschritt des Reinigungsvorgangs zur Verfügung zu haben, um einen ausreichenden Reinigungseffekt während der Bewegung des Wagens zu gewährleisten, wurde bisher lediglich durch das Vorsehen eines sehr langen Wagenfördersystems gelöst, bei dem die einzelnen Reinigungsvorgänge hintereinander entlang eines Förderbandes durchgeführt werden mußten. Dieses kostspielige und raumaufwendige System wird in vorteilhafter Weise durch die erfindungsgemäße Ausbildung beseitigt, da lediglich eine Drehbewegung des Wagens an den einzelnen stationären Elementen der Reinigungseinrichtung und damit ein erheblich einfacherer Aufbau erforderlich ist.

Nach einer vorteilhaften Ausgestaltung der Erfindung ist die Dreheinrichtung ein im Bereich des Gehäusebodens vorgesehener Drehtisch, der ein einfaches Be- und Entladen der Wagen gewährleistet. Vorzugsweise ist der Drehtisch um eine zentral angeordnete, vertikale Welle oder einen torartigen Jochrahmen drehbar angebracht, die mit der im Bereich der Decke des Gehäuses vorgesehenen Antriebseinrichtung verbunden ist. Die zu reinigenden Wagen können dann beidseitig der Welle beladen werden. Die zentral angeordnete Welle ist jedoch herausnehmbar ausgebildet und kann durch einen torartigen Jochrahmen ersetzt werden. Hierdurch ergibt sich der Vorteil, daß die gesamte Auflagefläche des Drehtisches zur Verfügung steht, wenn ein sehr großer Wagen gereinigt werden soll. Da sich die Entsorgungseinrichtung im allgemeinen im Bodenbereich des Gehäuses befindet, wäre eine besonders kompakte Ausgestaltung der erfindungsgemäßen Reinigungsvorrichtung nicht zu erreichen, wenn sich die verhältnismäßig oft zu wartende Antriebseinrichtung ebenfalls in diesem Bereich befände. Durch die Anordnung an der Gehäuseoberseite ist diese nunmehr leicht zugänglich, wobei eine kompakte Bauweise des Gehäuses immer noch möglich ist.

Nach einer weiteren Ausgestaltung ist am Drehtisch eine Haltevorrichtung vorgesehen, welche den Wagen für den Reinigungsvorgang positioniert und hält. Dabei ist es besonders vorteilhaft, daß die Haltevorrichtung eine Kreuzhalterung ist, die den Wagen jeweils an vier Punkten fixiert.

Die Reinigungseinrichtung kann eine Wascheinrichtung aufweisen, die stationäre Anschluß- und Auslaßarmaturen für Reinigungsflüssigkeit aufweist. Die Anschlußarmatur weist bevorzugt Spritzdüsen auf, die linear vertikal anbringbar sind, um somit ein Waschen des Wagens über seiner gesamten Höhe zu gewährleisten. Vorteilhafterweise können die Anschluß- und Auslaßarmaturen für Reinigungsflüssigkeit mit einer Heizeinrichtung, wie beispielsweise einem Durchlauferhitzer oder dergleichen, verbunden werden.

Die Reinigungseinrichtung kann eine Entsorgungseinrichtung zum Abführen von Abwasser aufweisen, die im Bereich des Gehäusebodens einen Tank aufweist, in dem die Reinigungsflüssigkeit, wie beispielsweise umgewälztes Wasser, zunächst angesammelt wird. Der Tank zum Auffangen des umgewälzten Wassers der Reinigungseinrichtung kann im Bodenbereich des Gehäuses als Wanne ausgebildet sein, die über die gesamte Bodenfläche und mit einem Gefälle zu den Wasserpumpen hin sowie zum Entleerungsventil verläuft. Es ist besonders vorteilhaft, wenn die Bodenwanne, welche als Vorratstank für die Reinigungsflüssigkeit dient, extrem flach ausgebildet ist, und beispielsweise nur 350 mm tief ist. Somit wird die mühelose Beschickung von Wagen über eine flache Rampe ermöglicht. Vorzugsweise wird die erfindungsgemäße Vorrichtung jedoch in eine Bodensenke von entsprechender Tiefe abgesenkt, um ein Einfahren der Wagen ohne Steigung zu ermöglichen. Damit erübrigen sich Hubtische oder andere aufwendige und gefahrenträchtige Liftmechanismen, wie sie bei Wagenreinigungsmaschinen bekannter Bauarten mit Einbringungshöhen von ca. 900 mm erforderlich sind.

Bevorzugt weist der Tank einen oder mehrere lose eingelegte Flachsiebe und wenigstens einen Siebkorb auf, die derart angeordnet sind, daß Abfallpartikel aus dem Reinigungsflüssigkeits-Kreislauf herausgefiltert und gegebenenfalls in die parallel zu den Flachsieben angeordneten Siebkörben eingeschwemmt werden. Zum Zwecke der Entleerung sind sowohl die Flachsiebe als auch die Siebkörbe herausnehmbar. Der Tank kann auch an einer oder mehrere, beispielsweise als Zentrifugalpumpen ausgebildete Wasserpumpen angeschlossen werden, wobei der Anschluß am niedrigsten Bereich des Tanks vorgesehen ist und die Pumpe oder Pumpen außerhalb des Gehäuses angeordnet sind. Somit ist auch die Entsorgungseinrichtung wartungsfreundlich gestaltet.

Es ist weiterhin bevorzugt, daß die Reinigungseinrichtung eine Einrichtung zum Erzeugen einer Luftströmung aufweist, die ein schnellaufendes Gebläse, einen Hochleistungsventilator oder einen Seitenkanalverdichter umfaßt. Die Einrichtung zum Erzeugen einer Luftströmung dient insbesondere zum Erzeugen von Luft, mittels der das Reinigungsgut getrocknet wird. Bevorzugt weist die Einrichtung zum Erzeugen der Luftströmung Luftdüsen auf, die linear vertikal an der Gehäuseinnenwand angeordnet sind, um den Wagen über seiner gesamten Höhe zu trocknen.

Zusätzlich umfaßt die Einrichtung zum Erzeugen der Luftströmung vorzugsweise eine Ausblaseinrichtung, die mit besonderen Ausblasluftschlitzen versehen werden kann. Diese Ausblasschlitze sind vorzugsweise auf den Innenboden des zu reinigenden Wagens gerichtet, um zu Beginn des Reinigungsvorganges vor dem Waschvorgang Servietten und andere Abfälle durch Erzeugen einer starken Wirbelströmung aus dem Wagen auszublasen.

Beim Drehen der Dreheinrichtung in getakteter Weise kann insbesondere der weiter unten beschriebene Tablettwagen Anwendung finden. Die einzelnen in radialem Abstand zueinander auf dem Wagen angeordneten Tablette werden hierdurch einzeln an der Reinigungseinrichtung vorbeibewegt, um ihre optimale Reinigung sicherzustellen. Bei einer radialen Anordnung der Tablette in Abständen von 15° wird die Dreheinrichtung in vorteilhafter Weise in 15°-Takten bewegt.

Wie bereits oben erwähnt, kann vorteihafterweise bevorzugt ein zum Reinigen von Tabletten und dergleichen besonders geeigneter Wagen vorgesehen werden, der bei der Vorrichtung und dem Verfahren gemäß der vorliegenden Erfindung sehr gute Reinigungsergebnisse erzielt. Dieser Wagen weist vorzugsweise eine Trägereinrichtung für Tablette auf, in der diese im wesentlichen vertikal gehalten sind. Gemäß einer besonders vorteilhaften Ausgestaltung dieses Wagens sind die Tabletts in bezug auf die zentral angeordnete Welle der erfindungsgemäßen Vorrichtung radial anbringbar. Damit können die Tablette hochkant und in zueinander fächerartig aufgespreizter Lage so in Position in der erfindungsgemäßen Vorrichtung gebracht werden, daß sowohl die Flüssigkeitsstrahlen des Wasch- und Spülsystems als auch der Luftstrom beim Trocknungsvorgang mühelos zwischen die einzelnen Tablette gelangen können. Die äußeren Abmessungen dieser fahrbaren halbkreisförmigen Tablettwagen entsprechen vorteilhafterweise dem verfügbaren Raum innerhalb der Reinigungskammer der erfindungsgemäßen Vorrichtung. Somit können zwei Fahrgestelle gleichzeitig auf dem Drehtisch zu beiden Seiten der mittig angeordneten Welle aufgenommen werden.

Die oben erwähnten Vorteile der vorliegenden Erfindung werden auch bei den erfindungsgemäßen Verfahren erzielt.

Nach einer besonderen Ausführungsform werden die Steuerung der Drehbewegung der Dreheinrichtung und der Betrieb der Reinigungseinrichtung in Abhängigkeit zueinander nach vorbestimmten Programmen durchgeführt.

Vorzugsweise werden auch während des Reinigungsvorganges ein Ausblas-, Wasch-, Spül- und Trocknungsvorgang nacheinander durchgeführt, um einen optimalen Reinigungseffekt zu erzielen. Bei manchen Reinigungsvorgängen sind jedoch einige dieser Reinigungsschritte nicht erforderlich.

Im folgenden soll die Erfindung lediglich beispielhaft anhand der beigefügten Zeichnungen näher erläutert werden. Dabei zeigt:
- Fig. 1: in einer schematischen Darstellung ein Ausführungsbeispiel einer Vorrichtung zum Reinigen von zumindest einem Wagen zum Transport von Speisetabletts oder dergleichen gemäß der vorliegenden Erfindung,
- Fig. 2: ein schematisch dargestellten Zyklusdiagramm eines Wagenreinigungsvorgangs,
- Fig. 3: ebenfalls schematisch dargestellt, einen Wagen, der für das Reinigen von einer Vielzahl von Tabletten in der Vorrichtung nach Fig. 1 besonders geeignet ist,
- Fig. 4: eine Draufsicht des Wagens gemäß Fig. 3 mit eingesetzten Tabletts, und
- Fig. 5: eine Draufsicht eines Wagens mit einem Grundriß gemäß Fig. 3, wobei die Tabletts jedoch parallel angeordnet sind.

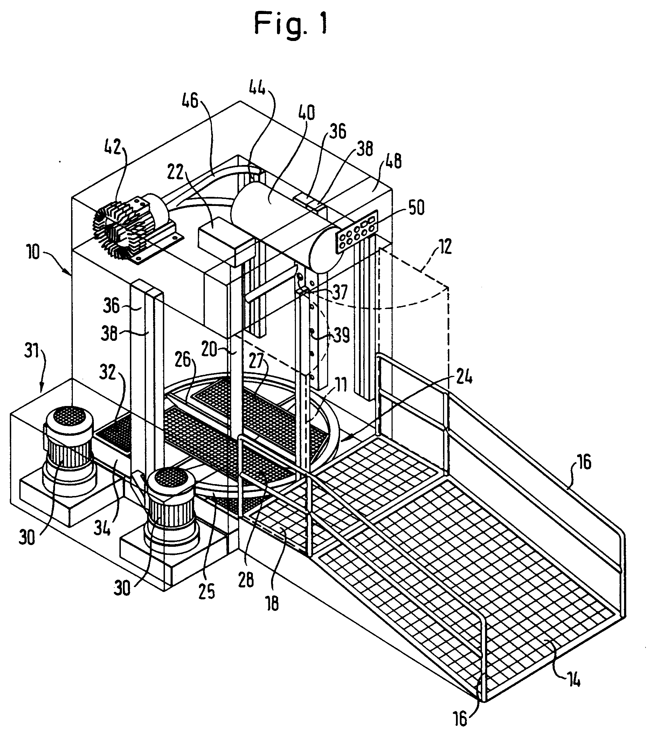

Die in Fig. 1 dargestellte Vorrichtung zum Reinigen von Wagen besteht aus einem Gehäuse 10, von dem in der Zeichnung aus Übersichtlichkeitsgründen lediglich die Außenkonturen angedeutet sind. Die an der Vorderseite des Gehäuses befindliche Einlaßöffnung für Wagen ist durch zwei verschwenkbare, gestrichelt dargestellte Türflügel 11, 12 verschließbar. Um einen Umlaufbetrieb bei der erfindungsgemäßen Vorrichtung zu gewährleisten, kann eine weitere verschließbare Öffnung an der gegenüberliegenden Seite des Gehäuses 10 als Auslaßöffnung vorgesehen werden, durch welche das gewaschene Gut bzw. die zu reinigenden Tablettwagen ausgefahren werden. Damit richtet sich die Vorrichtung in einem Arbeitsablauf mit definierter Schmutz- und Sauberseite ein, wobei Kreuzwege vermieden werden. Vor dem Gehäuse 10 ist eine mit seitlichen Geländern 16 versehene Rampe 14 angebracht, die im Einlaßbereich eine Plattform 18 einer Länge aufweist, die etwa der Breite der Türflügel 11, 12 entspricht.

Im Inneren des Gehäuses 10 der erfindungsgemäßen Vorrichtung ist eine Reinigungskammer für die Tablettwagen ausgebildet. In der Reinigungskammer befindet sich eine mittig und vertikal angeordnete, drehbar gelagerte Welle 20, die durch einen über der Reinigungskammerhaube angebrachten Motor 22 mit einem Getriebe in Drehbewegung versetzt wird. Die Welle 20 steht mit einer als Drehtisch ausgebildeten Dreheinrichtung 24 in Verbindung, wobei der Drehtisch im Bodenbereich des Gehäuses 10 untergebracht ist. Der kreisförmige Drehtisch 24 bildet die Standfläche für einen oder mehrere Wagen und besteht beispielsweise aus einem ringförmigen Rahmen 25 mit speichenartig zur Welle 20 verlaufenden Stützwinkeln oder Streben 26. Der Drehtisch ist mit herausnehmbaren Gitterrostsegmenten versehen, welche beidseitig der Welle 20 angeordnet sind und die Stand- oder Auflagefläche für den Wagen bilden und außerdem zur Reinigung herausgenommen werden können. Bei der Reinigung von Wagen für den Borddienst in Flugzeugen können beispielsweise entweder zwei Wagen der Standardgröße beidseitig der Welle 20 oder zwei Paare von Wagen halber Standardgröße Rücken an Rücken auf der Standfläche des Drehtisches 24 gereinigt werden. Es ist auch möglich, daß ein Wagen mit Standardgröße und zwei Wagen von halber Standardgröße zusammen auf dem Drehtisch 24 aufgenommen werden. Dies hat den Vorteil, daß mehrere Wagen gleichzeitig in einem Reinigungszyklus gereinigt werden können.

Zur sicheren Positionierung und Halterung des oder der Wagen während des Reinigungsvorgangs kann ein nicht-gezeigter Niederhalter vorgesehen sein, der höhenverstellbar auf der Drehtischachse angeordnet ist und mit einem Handgriff zur Arretierung abgesenkt wird. Zusätzlich können auch nicht-gezeigte, relingartige Seitenführungen vorgesehen werden, die verhindern, daß die Flügeltüren der Wagen während des Reinigungsvorgangs aufklappen und an den Innenwänden anstoßen oder sich verklemmen.

Unterhalb des Drehtisches 24 ist ein hier nicht sichtbarer, extrem flach gehaltener Tank angebracht, der als Vorratstank für die Reinigungs- bzw. Waschflüssigkeit oder Umwälzwasser dient und in dem die von dem Waschgut ablaufende Reinigungsflüssigkeit gesammelt wird. Der Tank ist beispielsweise als Wanne ausgebildet, die über die gesamte Bodenfläche des Gehäuses 10 verläuft und mit einem Gefälle zu der/den für die Reinigungsflüssigkeit vorgesehene(n) Pumpe oder Pumpen sowie zu einem Entleerungsventil ausgebildet ist. Ein besonderer Vorteil des flachen Tanks, der beispielsweise nur 350 mm über das Fundament der erfindungsgemäßen Vorrichtung herausragt, besteht darin, daß ein müheloses Be- und Entladen von Wagen über der flachen Rampe 14 ermöglicht wird. Vorzugsweise kann die erfindungsgemäße Vorrichtung in eine Bodensenke von einer Tiefe abgesenkt werden, die in etwa der Tiefe des Tanks entspricht und somit das Einfahren des Waschguts ohne Steigung möglich macht. In diesem Falle entfällt die Rampe 14.

Für das Ansaugen und die Entsorgung der in dem flachen Bodentank gesammelten Reinigungs- oder Umwälzflüssigkeit sind beispielsweise zwei Zentrifugalpumpen 30 vorgesehen, die mit dem tiefsten Punkt des Tanks verbunden und zwecks leichter Wartung außerhalb des Gehäuses 10 in einem Zusatzgehäuse 31 untergebracht sind. Um die Abfallpartikel aus der in den Bodentank zurückfließenden Reinigungs- bzw. Waschflüssigkeit aus dem Flüssigkeitskreislauf herauszufiltern und somit den störungsfreien Betrieb der Zentrifugalpumpen zu gewährleisten, sind über dem Bodentank unterhalb des Drehtisches 24 Flachsiebe 32 angeordnet, die zur Reinigung und zur leichten Wartung des Tanks herausgenommen werden können. Zusätzlich können auch zum Sammeln von Abfall Siebkörbe 34 vorgesehen werden, die parallel zu den Flachsieben 32 verlaufen und in denen Abfallpartikel von den Flachsieben eingeschwemmt werden können. Die Siebkörbe 34 sind ebenfalls zur Entleerung herausnehmbar.

Um die durch die Zentrifugalpumpen unter Druck gesetzte Reinigungsflüssigkeit auf das Waschgut zu sprühen, sind innerhalb des Gehäuses 10 senkrechte Träger 36 an den gegenüberliegenden geschlossenen Seitenwänden mit Auslaßöffnungen 37 für die Reinigungsflüssigkeit vorgesehen. Die Träger 36 sind vorzugsweise Düsenstöcke, dessen Auslaßöffnungen 37 als Sprühdüsen ausgebildet sind. Die Düsen 37 verlaufen bevorzugt in vertikal linearen Düsenreihen, um beim Waschen des Waschgutes die Reinigungsflüssigkeit im wesentlichen über die gesamte Höhe des Waschgutes zu sprühen. Zusätzlich zu den Düsenstöcken 36 für die Waschflüssigkeit sind neben diesen zwei weitere vertikale Düsenstöcke 38 an beiden geschlossenen Seitenwänden mit entsprechenden Düsen 39 ebenfalls in vertikal linearen Düsenreihen angeordnet, um in einem dem Waschvorgang nachfolgenden Spülvorgang Spülflüssigkeit auf das Waschgut zu spritzen. Der Spülvorgang kann mittels Frischwasser erfolgen, welches in einem Durchlauferhitzer 40 auf eine geeignete Spültemperatur von beispielsweise 65°C erhitzt wird. Sowohl die Waschdüsen 37 als auch die Frischwasserspüldüsen 39 sind vorzugsweise so angeordnet, daß ein direkter Wasserstrahl die üblicherweise an den Wagenboden angebrachten Laufrollen nicht trifft. Somit wird verhindert, daß das Schmiermittel aus den Kugellagern der Laufrollen herausgewaschen wird.

Dem Spülvorgang folgt ein Trocknungsvorgang bzw. ein den Spülvorgang nachgeschalteter Schleudervorgang durch schnelles Drehen des Wagens. Der Trocknungsvorgang erfolgt mittels Luft, die von einem Hochleistungsventilator 42 komprimiert und beispielsweise über zwei in dem Inneren des Gehäuses 10 an mindestens einer Seitenwand vorgesehenen vertikalen Luftschlitzen oder Düsenreihen 44 mit hoher Geschwindigkeit auf das Waschgut geblasen wird. Anstelle des Hochleistungsventilators kann auch die Einrichtung zum Erzeugen der Luftströmung als Seitenkanalverdichter oder als schnellaufendes Gebläse ausgeführt sein. Die Einrichtung zum Erzeugen der Luftströmung für den Trocknungsvorgang kann zusätzlich eine Ausblaseinrichtung aufweisen, die zu einem dem Waschvorgang vorgeschalteten Ausblasvorgang dient. Hierzu können weitere in Fig. 1 nicht gezeigte Luftschlitze vorgesehen werden, die bevorzugt derart ausgerichtet sind, daß ein starker Luftstrahl auf dem Innenboden eines sich in dem Gehäuse 10 befindlichen Wagens geblasen wird. Der Ausblasluftstrahl kann mittels des Hochleistungsventilators 42 für die Trocknungsluft erzeugt werden. Hierzu kann die Luftzufuhr an den Ausblasluftschlitzen beispielsweise über eine entsprechend gesteuerte (nicht gezeigte) Weiche erfolgen, die in einem den Hochleistungsventilator 42 mit den Luftschlitzen 44 verbindenden Luftkanal 46 vorgesehen werden kann. Die Ausblaseinrichtung dient vorteilhafterweise dazu, durch das Erzeugen einer Luftwirbelung die sich gegebenenfalls auf dem Innenboden des Wagens befindlichen größeren Abfallgegenstände, beispielsweise Servietten oder dergleichen, vor dem Waschvorgang aus dem Wageninneren zu enfernen und eine bessere Waschleistung zu gewährleisten. Die Servietten werden in den Siebkörben aufgefangen.

Sowohl die Luftschlitze als auch die Waschdüsen 37 und Spüldüsen 39 sind linear vertikal und stationär in den Seitenwänden des Gehäuses 10 integriert, so daß sie mit den Gehäuseinnenwänden abschließen und somit eine Reinigungskammer ohne störende Hindernisse beim Drehen der Wagen bilden. Es ist jedoch auch möglich, sowohl die Luftschlitze oder Luftdüsen als auch die Wasch- und Spüldüsen drehbar anzuordnen, um deren Wirkungsbereich zu erhöhen.

Die gesamte Steuerung für die erfindungsgemäß in Abhängigkeit zueinander durchgeführte Drehbewegung des Drehtisches 24 und der Betrieb der Reinigungseinrichtung zur Durchführung der gewählten Reinigungsvorgänge wird über eine separate Steuereinrichtung erreicht, beispielsweise mittels eines Schaltkastens 48 mit gespeicherten Reinigungsprogrammen, der im oberen Bereich des Gehäuses 10 über der Reinigungskammer angeordnet ist. Die Bedienung der erfindungsgemäßen Vorrichtung erfolgt durch Betätigen von Schaltern und Tasten, die auf einem Bedienungsfeld 50 an der Vorderseite des Schaltkastens 48 gut erreichbar untergebracht sind.

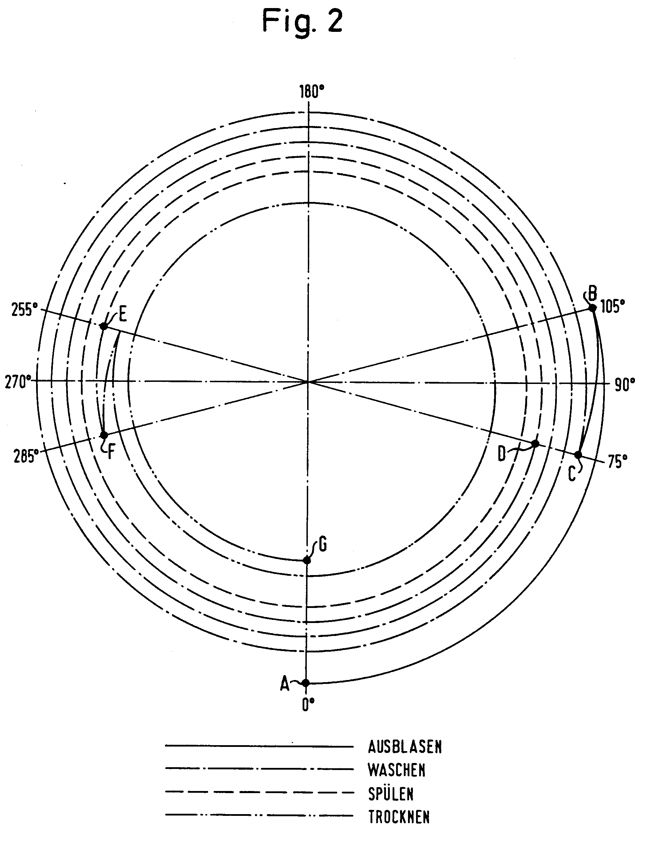

Fig. 2 zeigt schematisch ein Ablaufdiagramm eines Beispiels eines Wagenreinigungsvorgangs, wobei dieses Beispiel das Reinigen von zwei kastenförmigen Wagen betrifft, wie zum Beispiel zwei Servierwagen für den Flugzeugborddienst, die an beiden Enden offen sind. In dem dargestellten Ablaufdiagramm entsprechen die schematisch dargestellten Linienzüge den jeweils durchgeführten Reinigungsvorgängen, die in Abhängigkeit zur Drehposition des Drehtisches gesteuert werden. In diesem Beispiel umfaßt der Reinigungsvorgang einen Ausblas-, Wasch-, Spül- und Trocknungsvorgang. Die jeweiligen Vorgänge sind entsprechend der in Fig. 2 angedeuteten Schlüssel mit unterschiedlichen Linienzügen bezeichnet. Die Ausgangsposition des Reinigungsvorgangs, die der Be- und Entladeposition der Wagen entspricht, ist mit Bezugszeichen A bezeichnet. Des weiteren findet in diesem Beispiel die Drehbewegung im wesentlichen im Gegenuhrzeigersinn statt und beginnt bei A bei 0°. Nach dem Einfahren sind die zwei Wagen so auf dem Drehtisch angeordnet, daß ihre eine offene Seite jeweils eines Wagens jeweils nebeneinander der Position A zugekehrt sind.

Am Anfang des Reinigungsvorgangs findet zunächst der Ausblasvorgang statt. Die Ausblaseinrichtung und die Drehbewegung des Drehtisches wird zu Beginn mittels der Steuereinrichtung in Betrieb gesetzt. Wenn die einen offenen Seiten der Wagen in den Hauptwirkungsbereich der Ausblaseinrichtung gelangen, die in diesem Beispiel um etwa 90° auf den Drehkreis des Drehtisches versetzt angeordnet ist, wird auf die Innenböden der Wagen durch entsprechend gerichtete Luftschlitze der Ausblaseinrichtung ein schneller Luftstrom durch die offenen Seiten geblasen. Dadurch werden Servietten und andere Abfälle aus dem Wagen ausgeblasen. Bei einer in Fig. 2 mit B bezeichneten Position, der 105° entspricht, wird die Drehbewegung des Drehtisches angehalten und bis zu einem Punkt C, der 75° entspricht, zurückbewegt. Diese Oszillationsbewegung erzeugt einen Wirbelstrom auf dem Innenboden der jeweiligen Wagen, um das Ausblasen von allen Abfällen zu gewährleisten. Bei Punkt C wird durch die Steuereinrichtung die Ausblaseinrichtung außer Betrieb und die Wascheinrichtung in Betrieb genommen.

So wird aus Waschflüssigkeitsdüsen, die hier in der erfindungsgemäßen Vorrichtung in etwa bei 90° und 270° angeordnet sind, Reinigungsflüssigkeit auf den Wagen gespritzt. Der Waschvorgang wird durch drei vollständige Drehungen des Drehtisches um 360°, d.h. insgesamt 1080°, durchgeführt. Danach wird der Waschvorgang bei Punkt D in Fig. 2, welcher 75° entspricht, beendet und der Spülvorgang in Betrieb gesetzt. Hierbei wird über Spüldüsen Spülflüssigkeit auf den Wagen gespritzt, wobei auch die Spüldüsen in der erfindungsgemäßen Vorrichtung in etwa bei 90° und 270° angeordnet sind. Der Spülvorgang findet über 1 1/2 Drehungen des Drehtisches statt, was 540° entspricht.

Der Spülvorgang wird dann bei dem Punkt E in Fig. 2, welcher 255° entspricht, beendet.

Anschließend wird nun bei Punkt E die Trocknungsphase durch die Steuereinrichtung in Betrieb gesetzt. Bei dem Trocknungsvorgang wird Luft über Luftschlitze oder Luftdüsen auf den Wagen geblasen, wobei auch diese Luftdüsen in etwa bei 90° angeordnet sind. Um ein optimales Trocknen der Wageninnenräume zu gewährleisten, wird der Drehtisch auch während des Trocknungsvorganges zeitweise oszilliert. Bei diesem Trocknungsvorgang wird der Drehtisch, beginnend bei Punkt E zwischen Position E und Position F, die 285° entspricht, einmal hin- und heroszilliert. Diese oszillierende Bewegung des Drehtisches in der Anfangsphase des Trocknungsvorgangs gewährleistet einen erhöhten Trocknungseffekt, insbesondere in dem Innenraum der Wagen. Schließlich wird der Drehtisch um mehr als eine volle Umdrehung gedreht, bis die einen nebeneinanderliegenden offenen Seiten der Wagen wieder an der Be- und Entladeposition angelangt sind, die mit Bezugszeichen G in Fig. 2 bezeichnet ist. Danach wird der Trocknungsvorgang durch die Steuereinrichtung außer Betrieb gesetzt und der Reinigungsvorgang ist beendet. Die Wagen können dann wieder aus der erfindungsgemäßen Vorrichtung in einfacher Weise herausgefahren werden.

Wenn bei obigem Beispiel der Drehtisch mit einer Drehgeschwindigkeit von ca. 12°/sec. gedreht wird, dauert der Reinigungsvorgang vorteilhafterweise nur etwa 3 Minuten.

Wie bereits erwähnt, wurden bei dem oben beschriebenen Beispiel zwei Borddienstwagen von Standardgröße gewaschen. Wenn vier Borddienstwagen von halber Standardgröße gewaschen werden, werden diese Rücken an Rücken auf den Drehtisch geladen, und die Ausblas- und Trocknungsvorgänge müssen um 180° verlängert werden, um das Ausblasen und Trocknen von beiden Wagenpaaren zu gewährleisten. Es ist auch selbstverständlich, daß die oszillierende Bewegung des Drehtisches auch während dem Wasch- und Spülvorgang durchgeführt werden kann, um die optimale Wirkung dieser Vorgänge zu unterstützen.

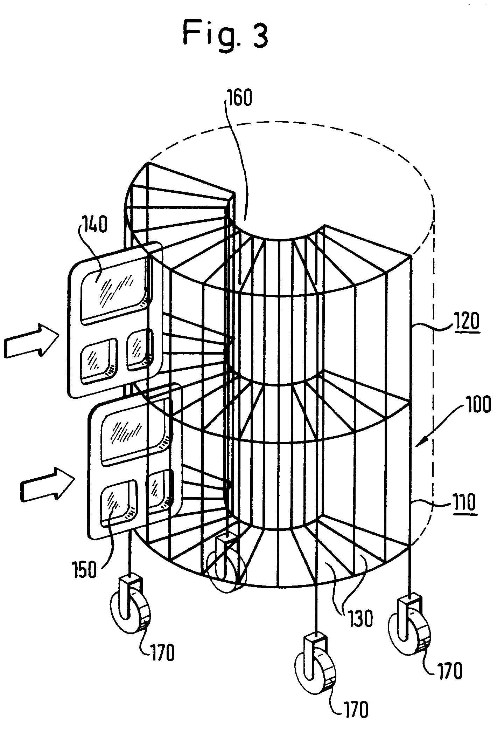

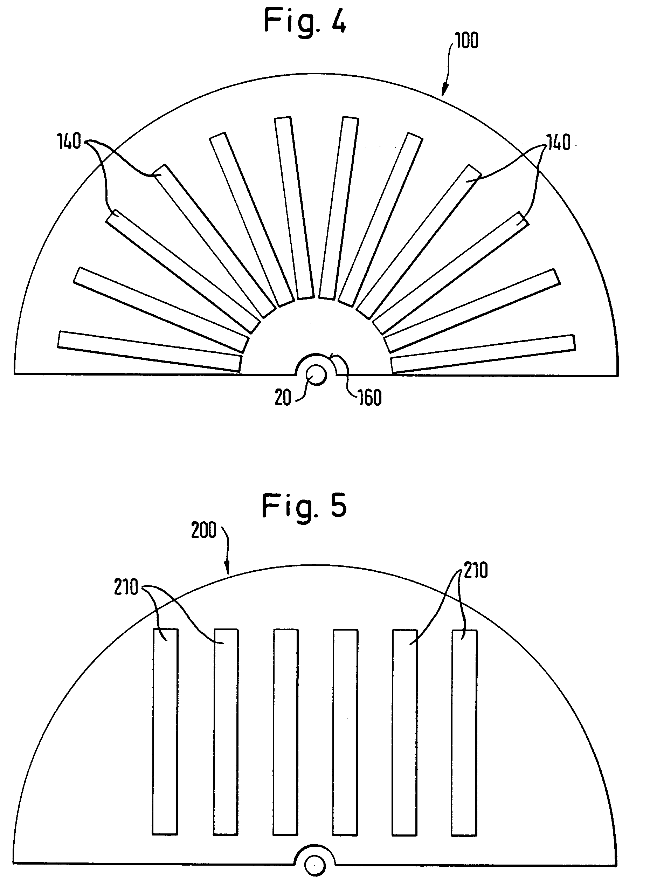

Fig. 3 zeigt einen Tablettwagen, der besonders vorteilhaft für das Reinigen einer Vielzahl von Tabletten, vorzugsweise zur Verwendung in der Vorrichtung nach Fig. 1, geeignet ist. Fig. 2 stellt einen derartigen Tablettwagen 100 dar, der in diesem Beispiel in zwei Ebenen 110 und 120 in einer Vielzahl von radial ausgerichteten Fächern 130 aufgeteilt ist. In den Fächern 130 können die jeweils zu reinigenden Tablette 140, 150, wie durch Pfeile angedeutet, eingeschoben und in vertikaler Lage gehalten werden. Der Wagen weist eine zentrale Öffnung 160 auf, die zweckmäßigerweise zu einem der Fächer hin offen ist, so daß der Wagen 100 beispielsweise um die Welle 20 des Drehtisches 24 der Vorrichtung gemäß Fig. 1 geschoben werden kann. Weiterhin sind vier Rollen 170 an der Unterseite des Wagens vorgesehen, die aus zwei Bockrollen und zwei gebremsten Lenkrollen zum leichten Manövrieren bestehen können. Der Wagen 100 weist einen halbkreisförmigen Grundriß auf, bei dem vorteilhafterweise unter gleichzeitiger Anwendung zweier dieser Wagen in eine Vorrichtung gemäß Fig. 1 eine optimale Ausnutzung der gesamten zur Verfügung stehenden Drehtischfläche ermöglicht wird. Bei diesem Wagen 100, wie aus Fig. 4 deutlich zu erkennen ist, sind die Tablette 140, 150 radial bezüglich der Welle 20 des Drehtisches 24 angeordnet, so daß diese zwar eng gepackt, jedoch voneinander beabstandet unter guter Ausnutzung des zur Verfügung stehenden Raumes gehalten werden. Hierdurch wird der besondere Vorteil erzielt, daß ein optimaler Reinigungseffekt durch die fächerartig zu den Wasch- und Spüldüsen sowie der Trocknungsluftdüsen der Vorrichtung gemäß Fig. 1 geöffnete Position bewirkt wird.

In einem Wagen 100 mit beispielsweise zwei mal zwölf vertikal gehaltenen Tablette 140, 150, die in radialen Abständen von 15° voneinander angeordnet sind, können zwei solche Wagen gleichzeitig in einer Vorrichtung gemäß Fig. 1 gereinigt werden. Nach dem Einfahren der Wagen 100 auf dem Drehtisch 24 werden die Türflügel 11, 12 geschlossen und der Reinigungsvorgang in Betrieb gesetzt. Zuerst wird der Waschvorgang durchgeführt, und zwar derart, daß ab der Beladeposition getaktet in 15°-Abständen mittels der Steuereinrichtung gedreht wird. Gleichzeitig wird Waschflüssigkeit auf den entsprechend gegenüberliegenden Tabletten 140, 150 in die Fächer der Ebenen 110, 120 gesprüht. Nach dem Waschvorgang werden die Spül- und Trocknungsvorgänge in ähnlicher Weise um 15° getaktet und durch die gesteuerte Drehung des Drehtisches bei gleichzeitiger Steuerung der Spüldüsen 39 bzw. Luftschlitze 44 durchgeführt. Wenn die letzte zu reinigende Reihe von vertikalen Tabletts 140, 150 in der Be- und Entladeposition angekommen ist, wird der Reinigungsvorgang beendet und die Wagen 100 können entladen werden.

Dieser Reinigungsvorgang gewährleistet in vorteilhafter Weise eine sehr gute Reinigung aller in dem Wagen gehaltenen Tablette, da sowohl die Wasserstrahlen des Wasch- und Spülvorgangs als auch der Luftstrom beim Trocknungsvorgang mühelos zwischen die einzelnen Tabletts aufgrund deren fächerartig radial aufgespreizter Lage und des gesteuerten, aufeinander abgestimmten Betriebs der Drehung und der Reinigungsvorgänge gelangen können. Während des Reinigens der Tablette, vorzugsweise von solchen aus zwei isolierten Halbschalen bestehenden Warmhaltetabletten, wie sie häufig für die Speiseverteilung in Verpflegungsbetrieben verwendet werden, bietet die Hochkantlage der Tablette die Gewähr, daß Flüssigkeit schnell und vollständig nach dem Wasch- bzw. Spülvorgang abfließen kann und daß nicht wie bei der bisher üblichen Schräglage in konventionellen Bandwaschautomaten Restflüssigkeitsrückstände in den Mulden der Tabletts zurückbleiben, was ein unzureichendes Spül- und Trocknungsergebnis zur Folge haben kann.

Der Reinigungseffekt bei dem oben erwähnten Reinigungsverfahren in einer Vorrichtung gemäß Fig. 1 kann weiter optimiert werden, indem der Drehtisch nicht nur getaktet, gedreht und gehalten wird, sondern in diese getaktete Positionen oszillierend bewegt wird. Somit treten die Wasserstrahlen und Luftströme in dem entsprechenden Reinigungsvorgang öfters auf die zu reinigenden Tablette, um einen noch besseren Reinigungseffekt zu erzielen. Die einzelnen Drehbewegungsabläufe und Reinigungsvorgänge können auch durch entsprechend gespeicherte Programme in der Steuereinrichtung in Abhängigkeit zueinander durchgeführt werden.

Wie in Fig. 5 dargestellt, ist es auch möglich, Wagen 200 zu konstruieren, in denen die Tablette 210 parallel zueinander angeordnet sind, obwohl hier der in der Reinigungsvorrichtung gemäß Fig. 1 zur Verfügung stehende Raum nicht vollständig ausgenutzt wird.

## Patentansprüche

1. Vorrichtung zum Reinigen von zumindest einem Wagen (100, 200) zum Transport von Speisetabletts (140, 150, 210) oder dergleichen, insbesondere Servierwagen für den Flugzeugborddienst, wobei der Wagen (100, 200) zumindest an einer Seite zum Be- und Entladen der Tabletts (140, 150, 210) offen ist, umfassend
- ein Gehäuse (10), welches eine verschließbare Einlaßöffnung aufweist und zum Aufnehmen des Wagens (100, 200) ausgebildet ist,
- eine Antriebseinrichtung (22), mittels derer der Wagen (100, 200) bewegbar ist,
- eine Reinigungseinrichtung,
- eine Steuereinrichtung (48) für den Betrieb der Antriebseinrichtung (22) und der Reinigungseinrichtung, und
- eine im Gehäuse (10) vorgesehene Dreheinrichtung (24) für den Wagen (100, 200), **die durch die Antriebseinrichtung (22) drehbar ist,**
dadurch gekennzeichnet, daß
- die Dreheinrichtung (24) **in einer konstanten Richtung und** über Kreissegmentstrecken oszillierend drehbar ausgebildet ist, und
- die Drehgeschwindigkeit und die Drehrichtung der Dreheinrichtung (24) und der Betrieb der Reinigungseinrichtung in Abhängigkeit zueinander von der Steuereinrichtung (48) steuerbar sind.

2. Vorrichtung nach Anspruch 1, **dadurch gekennzeichnet**, daß die Dreheinrichtung ein im Bereich des Gehäusebodens vorgesehener Drehtisch (24) ist.

3. Vorrichtung nach Anspruch 2, **dadurch gekennzeichnet**, daß der Drehtisch (24) um eine zentral angeordnete, vertikale Welle (20) oder einen torartigen Jochrahmen drehbar angebracht ist, die mit der im Bereich der Decke des Gehäuses (10) vorgesehenen Antriebseinrichtung (22) verbunden ist.

4. Vorrichtung nach Anspruch 2 oder 3, **dadurch gekennzeichnet**, daß an dem Drehtisch (24) eine Haltevorrichtung vorgesehen ist, welche den Wagen (100, 200) für den Reinigungsvorgang positioniert und hält.

5. Vorrichtung nach einem der Ansprüche 1 bis 4, **dadurch gekennzeichnet**, daß die Reinigungseinrichtung eine Wascheinrichtung aufweist, die stationäre Anschluß- und Auslaßarmaturen (36, 38) für Reinigungsflüssigkeit aufweist.

6. Vorrichtung nach Anspruch 5, **dadurch gekennzeichnet**, daß die Anschlußarmaturen (36, 38) Spritzdüsen (37, 39) aufweist, die linear vertikal oder linear vertikal und stationär angeordnet sind.

7. Vorrichtung nach einem der Ansprüche 1 bis 6, **dadurch gekennzeichnet**, daß Reinigungseinrichtung eine Entsorgungseinrichtung (30) zum Abführen von Abwasser besitzt, die im Bereich des Gehäusebodens einen Tank aufweist.

8. Vorrichtung nach einem der Ansprüche 1 bis 7, **dadurch gekennzeichnet**, daß die Reinigungseinrichtung eine Einrichtung (42) zum Erzeugen einer Luftströmung aufweist.

9. Vorrichtung nach Anspruch 8, **dadurch gekennzeichnet**, daß die Einrichtung (42) zum Erzeugen einer Luftströmung Luftdüsen (44) aufweist, die linear vertikal an der Gehäuseinnenwand angeordnet sind.

10. Vorrichtung nach Anspruch 9, **dadurch gekennzeichnet**, daß die Einrichtung (42) zum Erzeugen einer Luftströmung eine Ausblaseinrichtung (46) mit mindestens einer Schlitzdüse (44) aufweist.

11. Vorrichtung nach Anspruch 1, **dadurch gekennzeichnet**, daß die Dreheinrichtung (24) durch die Steuereinrichtung (48) getaktet bewegbar ist.

12. Vorrichtung nach Anspruch 11, **dadurch gekennzeichnet**, daß die Dreheinrichtung (24) in 15°-Takten bewegbar ist.

13. Verfahren zum Reinigen von zumindest einem Wagen (100, 200) zum Transport von Speisetabletts (140, 150, 210) oder dergleichen, insbesondere Servierwagen für den Flugzeugborddienst, wobei der Wagen (100, 200) zumindest an einer Seite zum Be- und Entladen von Tabletts (140, 150, 210) offen ist, umfassend die Schritte:
- Zuführen des Wagens (100, 200) in eine Reinigungseinrichtung,
- Vorbeibewegen des Wagens (100, 200) an der Reinigungseinrichtung und damit
- Reinigen des Wagens (100, 200), und
- Steuern der Bewegung des Wagens (100, 200) und des Reinigungsvorgangs,
dadurch gekennzeichnet, daß
- der Wagen (100, 200) mittels der Dreheinrichtung (24) und der Steuereinrichtung (48) **in konstanter Richtung und** über Kreissegmentstrecken oszillierend bewegt wird, und
- die Drehgeschwindigkeit und Drehrichtung der Dreheinrichtung (24) und der Reinigungsvorgang in Abhängigkeit zueinander gesteuert werden.

14. Verfahren nach Anspruch 13, **dadurch gekennzeichnet**, daß der Wagen (100, 200) getaktet gedreht wird.

15. Verfahren nach Anspruch 14, **dadurch gekennzeichnet**, daß der Wagen (100, 200) in 15°-Takten gedreht wird.

16. Verfahren nach einem der Ansprüche 13 bis 15, **dadurch gekennzeichnet**, daß die Steuerung nach vorbestimmten Programmen durchgeführt wird.

17. Verfahren nach einem der Ansprüche 13 bis 16, **dadurch gekennzeichnet**, daß während des Reinigungsvorganges ein Ausblas-, Wasah-, Spül- und Trocknungsvorgang nacheinander durchgeführt werden.

18. Verfahren nach Anspruch 17, **dadurch gekennzeichnet**, daß anstelle des Trocknungsvorganges ein Schleudervorgang durch schnelles Drehen des Wagens (100, 200) durchgeführt wird.

## Claims

1. Device for cleaning at least one trolley (100, 200) for the transport of food trays (140, 150, 210) or the like, especially serving trolleys for in-flight service in aircraft, the trolley (100, 200) being open at least on one side for loading and unloading the trays (140, 150, 210), comprising
- a housing (10) which comprises a lockable admission opening and is constructed to accommodate the trolley (100, 200),
- a drive device (22), by means of which the trolley (100, 200) can be moved,
- a cleaning device,
- a control device (48) for operating the drive device (22) and the cleaning device, and
- a turning device (24) for the trolley (100, 200) provided in the housing (10) which can be turned by the drive device (22),
characterised in that
- the turning device (24) is constructed to be capable of rotation in oscillating manner in a constant direction and over circular segment zones, and
- the turning speed and the turning direction of the turning device (24) and the operation of the cleaning device can be controlled as a function of one another by the control device (48).

2. Device according to Claim 1, characterised in that the turning device is a turntable (24) provided in the region of the housing floor.

3. Device according to Claim 2, characterised in that the turntable (24) is fitted rotatably about a centrally arranged vertical shaft (20) or a gate-like yoke frame which is connected to the drive device (22) provided in the region of the roof of the housing (10).

4. Device according to Claim 2 or 3, characterised in that on the turntable (24) a retaining device is provided which positions and holds the trolley (100, 200) for the cleaning process.

5. Device according to one of the Claims 1 to 4, characterised in that the cleaning device comprises a washing device which has stationary connecting and outflow fittings (36, 38) for cleaning liquid.

6. Device according to Claim 5, characterised in that the connecting fittings (36, 38) has spray nozzles (37, 39) which are arranged vertically in line or vertically in line and in stationary manner.

7. Device according to one of the Claims 1 to 6, characterised in that the cleaning device has a waste disposal device (30), for carrying away waste water, which has a reservoir in the region of the housing floor.

8. Device according to one of the Claims 1 to 7, characterised that the cleaning device comprises a device (42) for producing a stream of air.

9. Device according to Claim 8, characterised in that the device (42) for producing a stream of air has air nozzles (44) which are arranged vertically in line on the housing interior wall.

10. Device according to Claim 9, characterised in that the device (42) for producing a stream of air has a blow-out device (46) having at least one slot nozzle (44).

11. Device according to Claim 1, characterised in that the turning device (24) can be moved in rhythmic steps by means of the control device (48).

12. Device according to Claim 11, characterised in that the turning device (24) can be moved in steps of 15°.

13. Method for cleaning at least one trolley (100, 200) for the transport of food trays (140, 150, 210) or the like, especially serving trolleys for in-flight service in aircraft, the trolley (100, 200) being open on at least one side for loading and unloading trays (140, 150, 210), comprising the steps:
- delivery of the trolley (100, 200) into a cleaning device,
- moving the trolley (100, 200) past the cleaning device and with that
- cleaning of the trolley (100, 200), and
- controlling the movement of the trolley (100, 200) and of the cleaning process,
characterised in that
- by means of the turning device (24) and the control device (48) the trolley (100, 200) is moved in oscillating manner in constant direction and over circular segment zones, and
- the turning speed and turning direction of the turning device (24) and the cleaning process are controlled as a function of one another.

14. Method according to Claim 13, characterised in that the trolley (100, 200) is turned in rhythmic steps.

15. Method according to Claim 14, characterised in that the trolley is turned in steps of 15°.

16. Method according to one of the Claims 13 to 15, characterised in that the control is carried out according to predetermined programs.

17. Method according to one of the Claims 13 to 16, characterised in that during the cleaning process a blow-out, washing, rinsing and drying process are carried out consecutively.

18. Method according to Claim 17, characterised in that instead of the drying process a spinning process can be carried out by rapid rotation of the trolley (100, 200).

## Revendications

1. Dispositif de nettoyage d'au moins un chariot de transport (100, 200) de plateaux-repas (140, 150, 210) ou d'éléments similaires, notamment une desserte roulante pour le service de bord dans les avions, le chariot (100, 200) étant ouvert sur au moins un côté pour le chargement et le déchargement des plateaux (140, 150, 210), l'ensemble comprenant
- un carter (10) qui présente une ouverture d'entrée pouvant être fermée, et qui est conçue pour recevoir un chariot (100, 200),
- un dispositif d'entraînement (22) à l'aide duquel le chariot (100, 200) peut être mis en mouvement,
- un dispositif de nettoyage,
- un dispositif de commande (48) pour le fonctionnement du dispositif d'entraînement (22) et du dispositif de nettoyage, et
- un dispositif de rotation (24) pour le chariot (100, 200), prévu dans le carter (10) et pouvant être mis en rotation par le dispositif d'entraînement (22),
caractérisé
- en ce que le dispositif de rotation (24) est conçu de manière à pouvoir tourner dans un sens constant et de façon oscillante selon des parcours de segments de cercle, et
- en ce que la vitesse de rotation et le sens de rotation du dispositif de rotation (24), et le fonctionnement du dispositif de nettoyage peuvent être commandés les uns en fonction des autres, par le dispositif de commande (48).

2. Dispositif selon la revendication 1, caractérisé en ce que le dispositif de rotation est une table rotative (24) prévue dans la zone du plancher du carter.

3. Dispositif selon la revendication 2, caractérisé en ce que la table rotative (24) est montée tournante autour d'un arbre vertical (20) agencé de manière centrale, ou bien d'un cadre en forme de portique, qui est relié au dispositif d'entraînement (22) prévu dans la zone du plafond du carter (10).

4. Dispositif selon la revendication 2 ou 3, caractérisé en ce que sur la table rotative (24) est prévue un dispositif de maintien, qui positionne et maintient le chariot (100, 200) pour l'opération de nettoyage.

5. Dispositif selon l'une des revendications 1 à 4, caractérisé en ce que le dispositif de nettoyage comporte un dispositif de lavage, qui comprend des raccords de branchement et de sortie (36, 38) stationnaires, pour du liquide de nettoyage.

6. Dispositif selon la revendication 5, caractérisé en ce que les raccords de branchement (36, 38) comprennent des buses d'aspersion (37, 39) qui sont agencées de manière linéaire verticale, ou linéaire verticale et stationnaire.

7. Dispositif selon l'une des revendications 1 à 6, caractérisé en ce que le dispositif de nettoyage comprend un dispositif d'élimination des résidus (30) pour l'évacuation d'eaux usées, qui comporte un réservoir dans la zone du plancher du carter.

8. Dispositif selon l'une des revendications 1 à 7, caractérisé en ce que le dispositif de nettoyage comprend un dispositif (42) destiné à engendrer un écoulement d'air.

9. Dispositif selon la revendication 8, caractérisé en ce que le dispositif (42) destiné à engendrer un écoulement d'air comporte des buses d'air (44) qui sont agencées de manière linéaire verticale sur la paroi intérieure du carter.

10. Dispositif selon la revendication 9, caractérisé en ce que le dispositif (42) destiné à engendrer un écoulement d'air comprend un dispositif de soufflage (46) comportant au moins une buse en forme de fente (44).

11. Dispositif selon la revendication 1, caractérisé en ce que le dispositif de rotation (24) peut être mis en mouvement de manière cyclique par le dispositif de commande (48).

12. Dispositif selon la revendication 11, caractérisé en ce que le dispositif de rotation (24) peut être mis en mouvement selon des pas de cycle de 15°.

13. Procédé de nettoyage d'au moins un chariot de transport (100, 200) de plateaux-repas (140, 150, 210) ou d'éléments similaires, notamment une desserte roulante pour le service de bord dans les avions, le chariot (100, 200) étant ouvert sur au moins un côté pour le chargement et le déchargement de plateaux (140, 150, 210), le procédé comprenant les étapes suivantes:
- amenée du chariot (100, 200) dans un dispositif de nettoyage,
- déplacement du chariot (100, 200) devant le dispositif de nettoyage et ainsi
- nettoyage du chariot (100, 200), et
- commande du mouvement du chariot (100, 200) et de l'opération de nettoyage,
caractérisé
- en ce que le chariot (100, 200) est entraîné au moyen du dispositif de rotation (24) et du dispositif de commande (48) dans un sens constant et de façon oscillante selon des parcours de segments de cercle, et
- en ce que la vitesse de rotation et le sens de rotation du dispositif de rotation (24), et l'opération de nettoyage, sont commandés les uns en fonction des autres.

14. Procédé selon la revendication 13, caractérisé en ce que le chariot (100, 200) est tourné de manière cyclique.

15. Procédé selon la revendication 14, caractérisé en ce que le chariot (100, 200) est tourné selon des pas de cycle de 15°.

16. Procédé selon l'une des revendications 13 à 15, caractérisé en ce que la commande est effectuée selon des programmes prédéterminés.

17. Procédé selon l'une des revendications 13 à 16, caractérisé en ce que durant l'opération de nettoyage sont effectuées successivement une opération de soufflage, une opération de lavage, une opération de rinçage et une opération de séchage.

18. Procédé selon la revendication 17, caractérisé en ce qu'à la place de l'opération de séchage, on effectue une opération de centrifugation par une rotation rapide du chariot (100, 200).
